# EUROPEAN PATENT APPLICATION

(11) **EP 3 691 261 A1**
(43) Date of publication of application: **05.08.2020**
(21) Application number: 18861383.0
(22) Date of filing: 29.09.2018
(51) Int. Cl.: H04N 17/00, H04L 12/26

(54) **METHOD AND DEVICE FOR LOCATING VIDEO SERVICE FAULT, AND STORAGE MEDIUM**

(30) Priority: 29.09.2017 CN 201710906813
(71) Applicant: ZTE Corporation, Shenzhen, Guangdong 518057 (CN)
(72) Inventor: SHEN, Aihua, Shenzhen Guangdong 518057 (CN)
(74) Representative: Aipex B.V.
(86) International application number: PCT/CN2018/108592
(87) International publication number: WO 2019/062898

(57) **Abstract**

Provided are a method and device for locating a video service fault, and a storage medium. The method includes: in each collection period, respectively obtaining indictor data from multiple collection nodes and determining a fault collection node according to the indicator data of each collection node; statistically determining a fault collection node having a maximum proportion based on the fault collection nodes determined in L consecutive collection periods; and determining a video service fault location according to location information of the obtained fault collection node having a maximum proportion. The technical solution resolves the difficult of failing to locate a fault when a video service has the fault.

## Description

### CROSS-REFERENCES TO RELATED APPLICATIONS

This application claims priority to a Chinese patent application No. 201710906813.0 filed on September 29, 2017, disclosure of which is incorporated herein by reference in its entirety.

### TECHNICAL FIELD

The present invention relates to communications and, in particular, to a method and device for locating a video service fault, and a storage medium.

### BACKGROUND

With the continuous development of communication technology and Internet technology application, a video service based on the Internet Protocol (IP) network is vigorously developed and accepted and used by many families and individuals due to its characteristics of abundant film sources, convenience in viewing, flexible charges and the like. In order to expand the market and obtain more profit, providers of video services based on the IP network need to expand users on a large scale, and provide a high-quality user video experience and a competitive differentiated service. An important way for improving the user video experience is that when a video service has a fault, the fault can be located and solved. Because the video service based on the IP network has a long video service link and spans multiple nodes and links such as a video program source, a program content distribution device, a backbone network, a metropolitan area network, an access network, a user terminal and the like, there is a fault (such as a jam or a delay) when a user watches a live or on-demand video. The fault can usually be located in the following methods.

The first method is to deploy a monitoring device at each video device or link location to detect whether there is a problem in a node indicator, a network indicator, or a video stream belonging to the monitoring device. This method can detect whether there is a problem in a monitoring point where the monitored stream or indicator is located, but if the monitoring point is a problem-derived monitoring point, the root location of the problem cannot be located.

The second method is to preset a channel test page on a page of a user's player terminal (such as a set-top box or other mobile terminals), and when a problem occurs, the user terminal starts a play test channel to judge whether there is a problem at the location of the test channel. The problem of this method is that: an actual system may have hundreds of node locations for providing video services, and a player terminal of a user cannot display hundreds of test channels, or cannot execute all test channels. If the problem is caused by video content, this kind of fault cannot be detected through a simulation stream of the test channel or a fixed program.

The third method is to collect statistics of a large amount of data of the problem in the user player terminal (such as a set-top box or other mobile terminals), and then associate a location where faults are concentrated according to network topology information of the user terminal, so as to locate the fault. This method firstly requires determining a fault threshold indicator manually and then filtering out fault data. However, in fact, the threshold is an empirical value and is a manually determined classification standard, and it is actually difficult to determine the threshold of some indicators in some cases.

### SUMMARY

The main object of the present invention is to provide a method and device for locating a video service fault and a storage medium so as to resolve the difficult of failing to locate a fault when a video service has the fault.

To achieve the above object, the present invention provides a method for locating a video service fault. The method includes steps described below.

In each collection period, indictor data is respectively obtained from multiple collection nodes, and a fault collection node is determined according to the indicator data of each collection node.

A fault collection node having a maximum proportion is statistically determined based on fault collection nodes determined in L consecutive collection periods.

A location of the video service fault is determined according to location information of the determined fault collection node having the maximum proportion.

In the above solution, the step in which a fault collection node is determined according to the indicator data of each collection node includes steps described below.

The multiple collection nodes are classified into K clustering sets by using a K-means clustering algorithm according to the indicator data of each collection node.

One of the K clustering sets is determined as a fault clustering set according to indicator data of collection nodes in each clustering set, where the collection node in the fault clustering set is the fault collection node.

In the above solution, the step in which one of the K clustering sets is determined as the fault clustering set according to the indicator data of collection nodes in each clustering set includes steps described below.

Average indicator data of each clustering set is calculated according to the indicator data of the collection nodes in each clustering set.

If the indicator data is a positive indicator, a clustering set with a maximum average indicator data value is set as the fault clustering set.

If the indicator data is a negative indicator, a clustering set with a minimum average indicator data value is set as the fault clustering set.

In the above solution, before the indictor data is respectively obtained from the multiple collection nodes, the method further includes steps described below.

An indicator data collection task is sent to the multiple collection nodes so that each collection node collects indicator data from a device belonging to the collection node according to the indicator data collection task.

In the above solution, the collection nodes are disposed at a streaming media node device location, a network device location and a network path through which a video stream flows.

In addition, to achieve the above object, the present invention further provides a device for locating a video service fault. The device includes a processor, a memory and a communication bus.

The communication bus is configured to implement connection communication between the processor and the memory.

The processor is configured to execute programs for locating a video service fault stored in the memory to implement the steps described below.

In each collection period, indictor data is respectively obtained from multiple collection nodes, and a fault collection node is determined according to the indicator data of each collection node.

A fault collection node having a maximum proportion is statistically determined based on fault collection nodes determined in L consecutive collection periods.

A location of the video service fault is determined according to location information of the determined fault collection node having the maximum proportion.

In the above solution, when the processor executes the step in which a fault collection node is determined according to the indicator data of each collection node, the step specifically includes steps described below.

The multiple collection nodes are classified into K clustering sets by using a K-means clustering algorithm according to the indicator data of each collection node.

One of the K clustering sets is determined as a fault clustering set according to indicator data of collection nodes in each clustering set, where the collection node in the fault clustering set is the fault collection node.

In the above solution, when the processor executes the step in which one of the K clustering sets is determined as the fault clustering set according to the indicator data of collection nodes in each clustering set, the step specifically includes steps described below.

Average indicator data of each clustering set is calculated according to the indicator data of the collection nodes in each clustering set.

If the indicator data is a positive indicator, a clustering set with a maximum average indicator data value is set as the fault clustering set.

If the indicator data is a negative indicator, a clustering set with a minimum average indicator data value is set as the fault clustering set.

In the above solution, the processor is further configured to execute the programs for locating a video service fault stored in the memory to implement the steps described below.

Before the indictor data is obtained respectively from the multiple collection nodes, an indicator data collection task is sent to the multiple collection nodes so that each collection node collects indicator data from a device belonging to the collection node according to the indicator data collection task.

In the above solution, the collection nodes are disposed at a streaming media node device location, a network device location and a network path through which a video stream flows.

The embodiments of the present invention further provide a storage medium. The storage medium is configured to store computer programs which, when executed by a processor, implement steps of the method for locating a video service fault described above.

The present invention provides a method and device for locating a video service fault and a storage medium. Video service indicator data is collected, and the collected video service indicator data is processed and analyzed, so as to locate the fault of the video service. The present invention directly obtains and analyzes actual program video indicator data. By analyzing different indicator data, the present invention can locate both the fault of the video program content and the fault caused by network transmission. Secondly, the collection node in the present invention can be a terminal (including a mobile terminal) or a system device (or an internal component of the system device). The collection node hence only needs to detect one video program each time, occupying fewer system and network resources, and can be flexibly and economically deployed in the whole network. Finally, the present invention does not rely on the conventional threshold determination method to judge whether it is fault data, but obtains fault feature data by using a K-means clustering algorithm and a statistical algorithm to finally implement the fault location.

### BRIEF DESCRIPTION OF THE DRAWINGS

FIG. 1 is a flowchart of a method for locating a video service fault according to an embodiment of the present invention;
FIG. 2 is a flowchart of another method for locating a video service fault according to an embodiment of the present invention;
FIG. 3 is a structural diagram of a system for locating a video service fault according to an embodiment of the present invention;
FIG. 4 is a structural diagram of a device for locating a video service fault according to an embodiment of the present invention; and
FIG. 5 is a structural diagram illustrating hardware of a device for locating a video service fault according to an embodiment of the present invention.

### DETAILED DESCRIPTION

To further explain the technical means adopted for achieving predetermined purposes and the effects achieved in the present invention, the present invention is described in details below in conjunction with the drawings and embodiments.

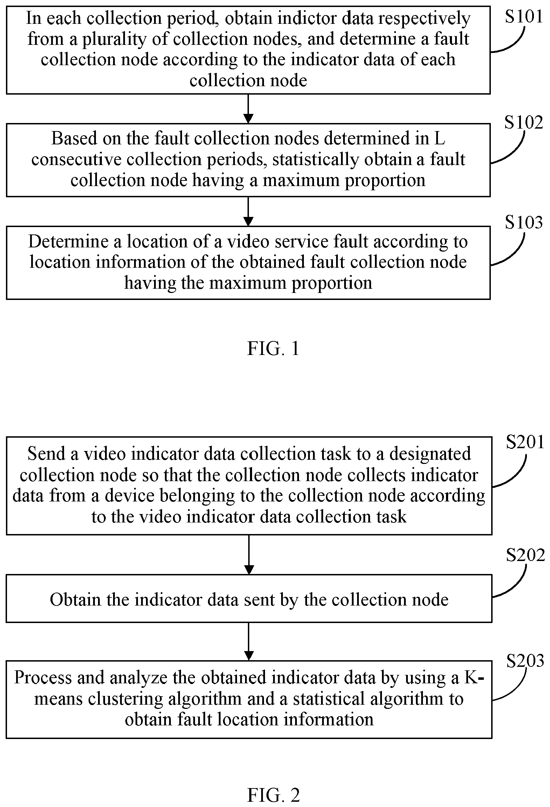

An embodiment of the present invention provides a method for locating a video service fault. As shown in FIG. 1, the method includes steps describe below.

In step S101, in each collection period, indictor data is respectively obtained from multiple collection nodes, and a fault collection node is determined according to the indicator data of each collection node.

In some embodiments, before the indictor data is respectively obtained from the multiple collection nodes, the method further includes steps described below.

An indicator data collection task is sent to the multiple collection nodes so that each collection node collects indicator data from a device belonging to the collection node according to the indicator data collection task.

For different collection tasks, the indicator data actually may be one indicator or multiple indicators having a liner relationship. The indicator data may be a video indicator for detecting whether the program content has problems. The indicator data may also be a network indicator for detecting whether the network has problems. The indicator data may also be other types of indicator for detecting whether other types of indicators have problems.

The collection nodes are disposed at a streaming media node device location, a network device location and a network path through which a video stream flows.

Further, the step in which a fault collection node is determined according to the indicator data of each collection node includes steps described below.

The multiple collection nodes are classified into K clustering sets by using a K-means clustering algorithm according to the indicator data of each collection node, where K is a positive integer.

One of the K clustering sets is determined as a fault clustering set according to indicator data of collection nodes in each clustering set, where the collection node in the fault clustering set is the fault collection node.

Further, the step in which one of the K clustering sets is determined as the fault clustering set according to the indicator data of collection nodes in each clustering set includes steps described below.

Average indicator data of each clustering set is calculated according to the indicator data of the collection nodes in each clustering set.

If the indicator data is a positive indicator, a clustering set with a maximum average indicator data value is set as the fault clustering set.

If the indicator data is a negative indicator, a clustering set with a minimum average indicator data value is set as the fault clustering set.

If the indicator data is the positive indicator, the smaller the value of indicator data is, the better the quality of indicator data is, while the larger the value of indicator data is, the worse the quality of indicator data is. If the indicator data is the negative indicator, the larger the value of indicator data is, the better the quality of indicator data is, while the smaller the value of indicator data is, the worse the quality of indicator data is.

In step S102, a fault collection node having a maximum quantity proportion is determined statistically based on fault collection nodes determined in L consecutive collection periods, where L is a positive integer.

In step S103, a location of the video service fault is determined according to location information of the obtained fault collection node having the maximum quantity proportion.

One or more collection nodes with the maximum quantity proportion are the collection nodes having a maximum probability of fault occurrence. Location information of the one or more collection nodes is obtained. The locations are the points where the fault occurs, that is, the locating of the video service fault is completed.

The location information includes user address (city-administrative district-place name or community) information, user network topology information, or mobile terminal locating information.

Preferably, according to the proportion of each collection node, the range of the fault can be determined. If the proportion of each collection node is distributed evenly, the fault is a common fault occurring in the region to which each collection node belongs. If the proportion is concentrated in a certain collection node, the fault is a local fault occurring in the region to which this certain collection node belongs.

An embodiment of the present invention provides another method for locating a video service fault. As shown in FIG. 2, the method includes steps describe below.

In step S201, a video indicator data collection task is sent to a designated collection node so that the collection node collects indicator data from a device belonging to the collection node according to the video indicator data collection task.

In some embodiments, before the video indicator data collection task is sent to the designated collection node, the method further includes steps described below.

A collection node which needs to collect the indicator data, an indicator data type, a collection period and a task time are determined.

Further, the collection nodes are disposed at a streaming media node device location, a network device location and a network path through which a video stream flows.

For different collection tasks, the indicator data actually may be one indicator or multiple indicators having a liner relationship. The indicator data may be a video indicator for detecting whether the program content has problems. The indicator data may also be a network indicator for detecting whether the network has problems. The indicator data may also be other types of indicator for detecting whether other types of indicators have problems.

If the program video to be collected is a multicast program, a multicast address and a port need to be set. If the program video to be collected is a unicast program, a URL of the unicast program needs to be set.

One task time includes multiple collection periods, and indicator data sent from the collection node is accepted in each collection period until the task time expires.

In step S202, the indicator data sent from the collection node is obtained.

In some embodiments, the step S202 includes steps described below.

In step A1, when the video indicator data collection task is sent to a collection node, a master program is started to monitor indicator data reported by each collection node. The master program can process the indicator data reported by each collection node in parallel.

In step A2, when the master program receives the indicator data reported by any of collection nodes, a sub-program is set for the collection node to receive the indicator data reported by the collection node, and the sub-program stores the received indicator data. Preferably, the storage structure of the indicator data is as follows: collection node N, collection time, indicator data.

In step A3, after the sub-program stores the indicator data, the sub-program exits and ends; the master program continues to monitor the indicator data reported by the collection node in the next collection period.

In step A4, when the master program receives collection task end information reported by the collection node, a task status of the collection node is set to Task End.

In step A5, the master program determines whether the task statuses of all collection nodes are Task End. If the task statuses of all collection nodes are Task End, the master program exits and ends; otherwise, the master program continues to monitor the indicator data reported by other collection nodes.

In step S203, the obtained indicator data is processed and analyzed by using a K-means clustering algorithm and a statistical algorithm to obtain fault location information.

In some embodiments, the step S203 includes steps described below.

In one collection period, each collection node is classified into the preset number of clustering sets by using the K-means clustering algorithm according to the obtained indicator data of each collection node, and a fault clustering set in one collection period is determined.

When the task time expires, according to the fault clustering set in each collection period, one or more collection nodes with the maximum number of occurrences in each fault clustering set are statistically determined based on the statistical algorithm.

A location where the fault occurs is determined according to devices belonging to the one or more collection nodes.

Further, the step of, in one collection period, classifying the collection nodes into the preset number of clustering sets by using the K-means clustering algorithm according to the obtained indicator data of each collection node, and determining the fault clustering set in one collection period specifically includes step described below.

In step B1, a K value and clustering sets are set, where the number of the clustering sets corresponds to the K value, and K is a positive integer.

The K value depends on the number of clustering sets, and the K value is less than or equal to the number of collection nodes in the collection task.

Preferably, the K value is set according to different task needs. When K is equal to 2, the quality of the collected indicator data is classified into two types: bad and good, that is, two clustering sets are set. When K is equal to 3, the quality of the collected indicator data is classified into three types: bad, medium and good, that is, three clustering sets are set. When K is equal to 4, the quality of the collected indicator data is classified into four types: bad, medium, good and excellent, that is, four clustering sets are set.

In this embodiment, K is equal to 3, that is, the collection nodes need to be classified into clustering sets: A1_1 { }, A2_1 { } and A3_1 { }, and the center point of each of these three clustering sets is P1_1, P2_1 and P3_1 respectively.

In step B2, a direction attribute of the indicator data is determined. The direction attribute of the indicator data includes: a positive indicator and a negative indicator.

In order to represent the relationship between the magnitude of the indicator data and the quality of the indicator, the direction attribute of the indicator data needs to be determined. If the direction attribute is the positive indicator, the smaller the value of indicator data is, the better the quality of indicator data is, while the larger the value of indicator data is, the worse the quality of indicator data is. If the direction attribute is the negative indicator, the larger the value of indicator data is, the better the quality of indicator data is, while the smaller the value of indicator data is, the worse the quality of indicator data is.

In step B3, a result set D_all{ } is set for storing collection nodes with bad quality.

In step B4, the indicator data of each collection node in one collection period is obtained, and the distance D1_1 between the indicator data of each collection node and the center point P1_1 of the clustering set A1_1 { }, the distance D2_1 between the indicator data of each collection node and the center point P2_1 of the clustering set A2_1{}, and the distance D3_1 between the indicator data of each collection node and the center point P3_1 of the clustering set A3_1 { } are calculated, and the collection nodes are classified into clustering sets corresponding to the minimum distance.

The collection nodes with the minimum distance D1_1 with respect to the center point P1_1 are classified into the set A1_1{ }, the collection nodes with the minimum distance D2_1 with respect to the center point P2_1 are classified into the set A2_1 {}, and the collection nodes with the minimum distance D3_1 with respect to the center point P3_1 are classified into the set A3_1{ }.

Preferably, the indicator data of any three collection nodes may be used as initial center points P1_1, P2_1 and P3_1 of the clustering sets A1_1 {}, A2_1 { } and A3_1 { } respectively.

If the indicator data is a single indicator, the value of the indicator data may be regarded as a point on the number axis. If the indicator data is a set of m indicators, the value of the indicator data may be regarded as a point in the m-dimensional space.

Any of the following algorithms can be used to calculate the distance between each indicator data and the center point: Euclidean distance algorithm, Manhattan distance algorithm, Minkowski distance algorithm or other distance algorithm.

In step B5, after each collection node is classified into one of the three clustering sets, according to the indicator data of each collection node in each clustering set, new center points P1_1, P2_1 and P3_1 of the three clustering sets are calculated based on the arithmetic average algorithm.

That is, the indicator data of collection nodes in the clustering set A1_1{} are averaged to obtain the new P1_1; the indicator data of collection nodes in the clustering set A2_1{ } are averaged to obtain the new P2_1; and the indicator data of collection nodes in the clustering set A3_1 { } are averaged to obtain the new P3_1.

In step B6, clustering sets A1_2{ }, A2_2{ } and A3_2{ } are set, the collection node list in the clustering set A1_1{ } is copied into the clustering set A1_2{ }, the collection node list in the clustering set A2_1{ } is copied into the clustering set A2_2{ }, the collection node list in the clustering set A3_1{ } is copied into the clustering set A3_2{ }, and the clustering sets A1_1 { }, A2_1 { } and A3_1 { } are cleared.

In step B7, the distances D1_2, D2_2 and D3_2 between the indicator data of each collection node and the now center points P1_1, P2_1 and P3_1 of the clustering sets A1_1 { }, A2 _1 { } and A3_1 { } are calculated, and the collection nodes are classified into clustering sets corresponding to minimum distance.

The collection nodes with the minimum distance D1_2 with respect to the new center point P1_1 are classified into the set A1_1 { }, the collection nodes with respect to the minimum distance D2_2 from the new center point P2_1 are classified into the set A2_1 { }, and the collection nodes with the minimum distance D3_2 with respect to the new center point P3_1 are classified into the set A3_1 { }.

In step B8, if collection nodes in A1_1 { } are inconsistent with collection nodes in A1_2{ } or collection nodes in A2_1{ } are inconsistent with collection nodes in A2_2{ } or collection nodes in A3_1{ } are inconsistent with collection nodes in A3_2{ }, steps B5 to B7 are repeated until collection nodes in A1_1{ } are consistent with collection nodes in A1_2{ }, collection nodes in A2_1{ } are consistent with collection nodes in A2_2{ } and collection nodes in A3_1{ } are consistent with collection nodes in A3_2{ }.

In step B9, if the direction attribute of the indicator data is a positive indicator, the magnitude of P1_1 and the magnitude of P3_1 are compared, the clustering set corresponding to the larger one of P1_1 and P3_1 is the fault clustering set, and collection nodes in the fault clustering set are added to the result set D_all{ }.

If the direction attribute of the indicator data is a negative indicator, the magnitude of P1_1 and the magnitude of P3_1 are compared, the clustering set corresponding to the smaller one of P1_1 and P3_1 is the fault clustering set, and collection nodes in the fault clustering set are added to the result set D_all{ }.

The collection nodes stored in D_all{ } are collection nodes where the quality of the indicator data is bad in this collection period.

Further, the step in which when the task time expires, according to the fault clustering set in each collection period, one or more collection nodes with the maximum number of occurrences in each fault clustering set are statistically determined based on the statistical algorithm specifically includes the following step.

One or more collection nodes with the maximum number of occurrences in the result set D_all{ } are statistically determined. The one or more collection nodes having the maximum proportion are the collection node having the maximum probability of fault occurrence. Information of a location to which the one or more collection nodes belong is obtained. The location is the point where the fault occurs, that is, the locating of the video service fault is completed.

The location information includes user address (city-administrative district-place name or community) information, or user network topology information, or mobile terminal locating information.

Preferably, according to the proportion of each collection node, the range of the fault can be determined. If the proportion of each collection node is distributed evenly, the fault is a common fault occurring in the region to which each collection node belongs. If the proportion is concentrated in a certain collection node, the fault is a local fault occurring in the region to which this certain collection node belongs.

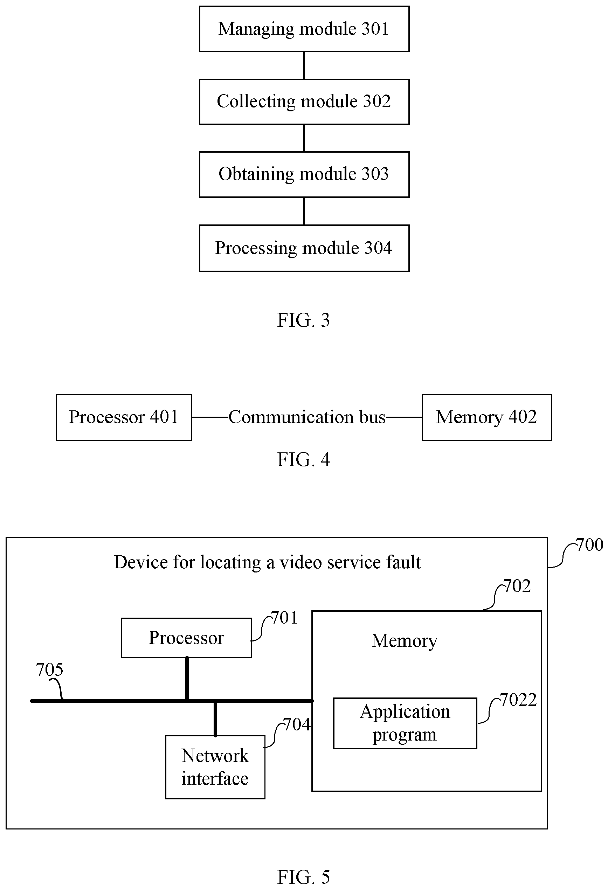

The embodiments of the present invention provide a system for locating a video service fault. As shown in FIG. 3, the system specifically includes the following components: a managing module 301, a collecting module 302, an obtaining module 303 and a processing module 304.

The managing module 301 is configured to manage multiple collecting modules 302 and send a video indicator data collection task to multiple designated collecting modules 302.

The collecting module 302 is configured to collect indicator data from a device belonging to the collection node according to the video indicator data collection task. Preferably, the collecting module 302 sends a video play request to the device belonging to the collection node, collects indicator data of the program in the video playing process of the device, and reports the collected indicator data to the obtaining module 303.

The obtaining module 303 is configured to obtain the indicator data sent by the collecting module 302.

The processing module 304 is configured to process and analyze the obtained indicator data by using the K-means clustering algorithm and the statistical algorithm to obtain fault location information.

Preferably, the managing module 301, the obtaining module 303 and the processing module 304 are general-propose servers and form a server cluster. The server cluster may support the smooth addition of servers to increase the processing capability of the obtaining module or the processing module.

The collecting module 302 obtains the indicator data according to the video indicator data collection task sent by the collecting module 301 in the server cluster, and reports the obtained indicator data to the server cluster. The obtaining module 303 in the server cluster receives the indicator data reported by the collecting module 302. The processing module 304 performs cluster analyzing and processing on the indicator data obtained by the obtaining module 303, and finally realizes the fault locating.

In some embodiments, the managing module 301 includes a maintenance unit and a task module.
1) The maintenance unit is configured to add, delete, modify and control the collecting module and display the current task status of the collecting module.
   The addition of a collecting module includes: adding the name of the collecting module, IP address of the collecting module, and the collection node to which the collecting module belongs. The name and IP address of the added collecting module, and the collection node to which the collecting module belongs may be configured through the maintenance unit. Alternatively, the name and IP address of the added collecting module, and the collection node to which the collecting module belongs may be automatically obtained from the collecting module through the maintenance unit.
   Controlling the collecting module includes: banning, starting and stopping the collecting module.
   The task status includes: No Task, Scheduled Task, Routine Task, In Task and Task End. When the colleting module is started, the current task status of the collecting module is Routine Task.
2) The task module is configured to determine the collecting module that participates in the current collection task, determine a program video that needs to be collected, determine an indicator data type that needs to be collected, and determine a task start mode, a collection period and a task time of the current collection task.

Preferably, for different collection tasks, the indicator data actually may be one indicator or multiple indicators having a liner relationship. The indicator data may be a video indicator for detecting whether the program content has problems. The indicator data may also be a network indicator for detecting whether the network has problems. The indicator data may also be other types of indicator for detecting whether other types of indicators have problems.

If the program video to be collected is a multicast program, the task module sets a multicast address and a port. If the program video to be collected is a unicast program, the task module sets a URL of the unicast program.

The task start mode includes: immediate start, scheduled start and routine task. The immediate start means that the task module immediately sends collection tasks to one or more set collecting modules at the same time. The scheduled start means that the task module simultaneously sends the collection tasks to one or more set collecting modules at the scheduled time. The routine task means that the collecting module obtains indicator data routinely while the task module does not need to send the collection task.

After the managing module sends the collection task, the managing module displays that the current task status of the collecting module is In Task. After the collection task of all collecting modules is completed, the managing module displays that the current task status of the collecting module is Task End. After the task status of the collecting module is set to Task End, the processing module starts to process and analyze the collected indicator data.

Further, the collecting module 302 is configured to implement the following operation.

After receiving the video indicator data collection task sent by the managing module 301, the collecting module 302 obtains the program video, indicator data type, collection period and task time configured by the managing module 301; and in one collection period, obtains video stream of the program video, and decodes and calculates the obtained video stream in real time to obtain the indicator data.

Preferably, if the program video is a multicast program, the collecting module 302 joins the multicast group to obtain the multicast video stream. If the program video is a unicast program, the collecting module 302 accesses the unicast program URL to obtain the unicast video stream.

A task time includes multiple collection periods. Before entering the next collection period, the collecting module 302 determines whether the task time expires. If the task time expires, the collecting module 302 reports the task end message to the managing module 301. If the task time does not expire, the collecting module 302 enters the next collection period.

Preferably, the collecting module 302 is an external general-propose server, and can be disclosed at any location where video stream data needs to be collected, such as a streaming media node device location, a network device location and a network path through which a video stream flows. The streaming media node device may provide on-demand or live (multicast or unicast) video services, and the network device may provide multicast live services.

The collecting module 302 may be a component module of the streaming media node device, or may be a server deployed independently outside the streaming media node device. The collecting module 302 may also be a component module of the network device, or may be a computer device deployed independently outside the network device. In addition, the collecting module 302 may also be a terminal device (including a mobile device), such as a set-top box, a computer, a cellphone, a tablet and other terminal devices.

Further, the obtaining module 303 is configured to implement the following operation.

When the managing module 301 sends the video indicator data collection task to the collecting module 302, the obtaining module 303 starts a master program to monitor indicator data reported by each collection node. The master program can process the indicator data reported by each collection node in parallel.

When the master program receives the indicator data reported by any collecting module, the obtaining module 303 sets a sub-program for receiving the indicator data reported by the collecting module. The sub-program stores the received indicator data, and preferably, the storage structure of the indicator data is as follows: collection node N, collection time, indicator data.

After the indicator data is stored in the sub-program, the sub-program exits and ends; the master program continues to monitor the indicator data reported by the collecting module in the next collection period.

When the master program receives collection task end information reported by the collecting module, the task status of the collecting module is set to Task End.

The master program determines whether the task statuses of all collecting modules are Task End. If the task statuses of all collecting modules are Task End, the master program exits and ends; otherwise, the master program continues to monitor the indicator data reported by other collecting modules.

Further, the processing module 304 specifically includes a classification unit, a statistics unit and a determination unit.

The classification unit is configured to, in one collection period, classify the collecting modules into the preset number of clustering sets by using the K-means clustering algorithm according to the obtained indicator data of each collecting module, and determine a fault clustering set in one collection period.

The statistics unit is configured to, when the task time expires, according to the fault clustering set in each collection period, statistically determine one or more collecting modules with the maximum number of occurrences in each fault clustering set based on the statistical algorithm.

The determination unit is configured to determine the fault location according to the devices belonging to the one or more collecting modules.

Further, the classification unit specifically includes a first classification sub-unit, a calculation sub-unit, a second classification sub-unit, a judgment sub-unit and a determination sub-unit.

The first classification sub-unit is configured to calculate the distance between the indicator data of each collecting module and the center point of each clustering set, and classify the collecting modules into clustering sets corresponding to the minimum distance.

The calculation sub-unit is configured to, after the collecting modules are classified into different clustering sets, according to the indicator data of each collecting module in each clustering set, calculate the new center point of each clustering set based on the arithmetic average algorithm.

The second classification sub-unit is configured to calculate the distance between the indicator data of each collecting module and the new center point of each clustering set, and re-classify the collecting modules into clustering sets corresponding to the minimum distance.

The judgment sub-unit is configured to judge whether results of the two classifications are the same, and if the results of the two classifications are not the same, repeatedly call the calculation sub-unit and the second classification sub-unit until the results of two classifications are the same.

The determination sub-unit is configured to determine the fault clustering set according to the direction attribute of the indicator data and the center point of each clustering set.

The embodiments of the present invention provide a device for locating a video service fault. As shown in FIG. 4, the device specifically includes: a processor 401, a memory 402 and a communication bus.

The communication bus is configured to implement connection communication between the processor 401 and the memory 402.

The processor 401 is configured to execute programs for locating a video service fault stored in the memory 402 to implement the steps described below.

In each collection period, indictor data is respectively obtained from multiple collection nodes, and a fault collection node is determined according to the indicator data of each collection node.

A fault collection node having a maximum proportion is statistically determined based on the fault collection nodes determined in L consecutive collection periods.

A location of the video service fault is determined according to location information of the determined fault collection node having the maximum proportion.

In some embodiments, when the processor 401 executes the step of determining a fault collection node according to the indicator data of each collection node, the processor 401 specifically performs the following steps.

The multiple collection nodes are classified into K clustering sets by using a K-means clustering algorithm according to the indicator data of each collection node.

One of the K clustering sets is determined as a fault clustering set according to indicator data of collection nodes in each clustering set, where the collection node in the fault clustering set is the fault collection node.

Further, when the processor 401 executes the step of determining one of the K clustering sets as the fault clustering set according to the indicator data of collection nodes in each clustering set, the processor 401 specifically performs the following steps.

Average indicator data of each clustering set is calculated according to the indicator data of the collection nodes in each clustering set.

If the indicator data is a positive indicator, a clustering set with a maximum average indicator data value is set as the fault clustering set.

If the indicator data is a negative indicator, a clustering set with a minimum average indicator data value is set as the fault clustering set.

Further, the processor 401 is further configured to execute programs for locating a video service fault stored in the memory 402 to implement the steps described below.

Before the indictor data is obtained respectively from the multiple collection nodes, an indicator data collection task is sent to the multiple collection nodes so that each collection node collects indicator data from a device belonging to the collection node according to the indicator data collection task.

Further, the collection nodes are disposed at a streaming media node device location, a network device location and a network path through which a video stream flows.

FIG. 5 is a structural diagram illustrating hardware of a device for locating a video service fault according to an embodiment of the present invention. The device 700 for locating a video service fault includes at least one processor 701, a memory 702 and at least one network interface 704. The various components in the device 700 for locating a video service fault are coupled together through a bus system 705. It may be understood that the bus system 705 is configured to implement connections and communications among these components. Besides a data bus, the bus system 705 further includes a power bus, a control bus and a state signal bus. However, for clarity of description, various buses are all denoted by the bus system 705 in FIG. 5.

The memory 702 in the embodiment of the present invention is configured to store various types of data to support operations of the device 700 for locating a video service fault. Examples of the data include any computer program operated in the device 700 for locating a video service fault, such as an application program 7022. Programs for implementing the methods in the embodiments of the present invention may be included in the application program 7022.

The methods disclosed by the embodiments of the present invention may be applied to the processor 701 or may be implemented by the processor 701. The processor 701 may be an integrated circuit chip with a signal processing capability. In the implementation process, various steps of the methods described above may be performed by an integrated logic circuit of hardware or a software instruction in the processor 701. The processor 701 described above may be a general-purpose processor, a digital signal processor (DSP), any other programmable logic device, a discrete gate or transistor logic device, a discrete hardware component or the like. The processor 701 may implement or execute various methods, steps and logic block diagrams disclosed by the embodiments of the present invention. The general-purpose processor may be a microprocessor or any conventional processor. The steps of the methods disclosed by the embodiments of the present invention may be directly implemented by a hardware decoding processor, or may be implemented by a combination of hardware and software modules in the decoding processor. The software module may be located in a storage medium which is located in the memory 702. The processor 701 reads information in the memory 702 and implements the steps of the methods described above in combination with hardware of the processor 701.

In an exemplary embodiment, the device 700 for locating a video service fault may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs) or micro processor units (MPUs), or other electronic elements for executing the methods described above.

Apparently, it should be understood by those skilled in the art that each of the above-mentioned modules or steps of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The embodiments of the present invention further provide a storage medium. The storage medium is configured to store computer programs which, when executed by a processor, implement steps of the method for locating a video service fault described above.

The foregoing procedures are embodiments of the present invention, and are not intended to limit to that the present invention can only be implemented by the foregoing embodiments. The method for executing the specific procedure is also not limited in the embodiments of the present invention. The embodiments of the present invention may also be implemented in a similar manner, for example, replacing units with devices, software, modules and components. Modification of the names, types and the like of various messages recorded in the embodiments of the present invention is merely the change in the form of naming and still falls within the scope of the present invention.

In the foregoing embodiments, the network-related may be applicable to IP networks supported by communication networks based on IEEE 802.3, IEEE 802.11b/g/n, POWELINE, Cable, Public Switched Telephone Network (PSTN), 3rd Generation Partnership Project (3GPP) network, 3GPP2 network or the like, the operating system of each device may be applicable to UNIX operating system, WINDOWS operating system, ANDROID operating system, IOS operating system, etc., and the interface for the customer may be applicable to a JAVA language interface or the like.

It should be understood that the devices and the methods disclosed in the embodiments of the present invention may be implemented in other manners. The embodiments described above are merely illustrative. For example, the unit division is merely a logical function division, and, in practice, the unit division may be implemented in other manners. For example, multiple units or components may be combined or may be integrated into another system, or some features may be omitted or not executed. In addition, coupling, direct coupling or communication connections between the presented or discussed components may be indirect coupling or communication connections between devices or units via interfaces.

The units described above as separate components may or may not be physically separated. Components presented as units may or may not be physical units, that is, may be located in one place or may be distributed over multiple network units. Part or all of these units may be selected according to practical requirements to achieve objects of the solutions in the embodiments of the present disclosure.

Of course, the present invention may have other various embodiments. Corresponding changes and modifications may be made by those skilled in the art according to the present invention without departing from the spirit and essence of the present invention. However, these corresponding changes and modifications fall within the scope of the claims in the present invention.

## Claims

1. A method for locating a video service fault, comprising:
in each collection period, respectively obtaining indictor data from a plurality of collection nodes, and determining a fault collection node according to the indicator data of each collection node;
based on the fault collection nodes determined in L consecutive collection periods, statistically determining a fault collection node having a maximum proportion; and
determining a location of the video service fault according to location information of the statistically determined fault collection node having the maximum proportion.

2. The method for locating a video service fault of claim 1, wherein the determining the fault collection node according to the indicator data of each collection node comprises:
classifying the plurality of collection nodes into K clustering sets by using a K-means clustering algorithm according to the indicator data of each collection node; and
determining one of the K clustering sets as a fault clustering set according to indicator data of collection nodes in each clustering set, wherein the collection node in the fault clustering set is the fault collection node.

3. The method for locating a video service fault of claim 2, wherein the determining one of the K clustering sets as the fault clustering set according to the indicator data of collection nodes in each clustering set comprises:
calculating average indicator data of each clustering set according to the indicator data of the collection nodes in each clustering set;
in response to determining that the indicator data is a positive indicator, setting a clustering set with a maximum average indicator data value as the fault clustering set; and
in response to determining that the indicator data is a negative indicator, setting a clustering set with a minimum average indicator data value as the fault clustering set.

4. The method for locating a video service fault of claim 1, wherein before the indictor data is obtained respectively from the plurality of collection nodes, the method further comprises:
sending an indicator data collection task to the plurality of collection nodes so that each collection node collects the indicator data from a device belonging to the collection node according to the indicator data collection task.

5. The method for locating a video service fault of any one of claims 1 to 4, wherein the collection nodes are disposed at a streaming media node device location, a network device location and a network path through which a video stream flows.

6. A device for locating a video service fault, comprising a processor, a memory and a communication bus;
wherein the communication bus is configured to implement connection communication between the processor and the memory;
the processor is configured to execute programs for locating a video service fault stored in the memory to implement the following steps:
in each collection period, respectively obtaining indictor data from a plurality of collection nodes, and determining a fault collection node according to the indicator data of each collection node;
based on the fault collection nodes determined in L consecutive collection periods, statistically determining a fault collection node having a maximum proportion; and
determining a location of the video service fault according to location information of the statistically determined fault collection node having the maximum proportion.

7. The device for locating a video service fault of claim 6, wherein when the processor executes the step of determining the fault collection node according to the indicator data of each collection node, the step specifically comprises:
classifying the plurality of collection nodes into K clustering sets by using a K-means clustering algorithm according to the indicator data of each collection node; and
determining one of the K clustering sets as a fault clustering set according to indicator data of collection nodes in each clustering set, wherein the collection node in the fault clustering set is the fault collection node.

8. The device for locating a video service fault of claim 6, wherein when the processor executes the step of determining one of the K clustering sets as the fault clustering set according to the indicator data of collection nodes in each clustering set, the step specifically comprises:
calculating average indicator data of each clustering set according to the indicator data of the collection nodes in each clustering set;
in response to determining that the indicator data is a positive indicator, setting a clustering set with a maximum average indicator data value as the fault clustering set; and
in response to determining that the indicator data is a negative indicator, setting a clustering set with a minimum average indicator data value as the fault clustering set.

9. The device for locating a video service fault of claim 6, wherein the processor is further configured to execute the programs for locating a video service fault stored in the memory to implement following steps:
before the indictor data is obtained respectively from the plurality of collection nodes, sending an indicator data collection task to the plurality of collection nodes so that each collection node collects the indicator data from a device belonging to the collection node according to the indicator data collection task.

10. The device for locating a video service fault of any one of claims 6 to 9, wherein the collection nodes are disposed at a streaming media node device location, a network device location and a network path through which a video stream flows.

11. A storage medium, which is configured to store computer programs which, when executed by a processor, implement the method for locating a video service fault of any one of claims 1 to 5.
